# FASCICULE DE BREVET EUROPEEN

(11) **EP 3 102 008 B1**
(45) Date de publication et mention de la délivrance du brevet: **22.11.2017**
(21) Numéro de dépôt: 16171896.0
(22) Date de dépôt: 30.05.2016
(51) Int. Cl.: H05H 1/48, H05H 1/50

(54) **RÉACTEUR À PLASMA FROID TOURNANT ET À FORÇAGE DE FLUX**
DREHENDER KALTPLASMAREAKTOR MIT FORCIERUNG DES VORTRIEBS
ROTARY, FORCED-FLOW COLD PLASMA REACTOR

(30) Priorité: 04.06.2015 FR 1555106
(43) Date de publication de la demande: 07.12.2016
(73) Titulaire: COMMISSARIAT À L'ÉNERGIE ATOMIQUE ET AUX ÉNERGIES ALTERNATIVES, 75015 Paris (FR)
(72) Inventeur: HOURDIN, Laurent, 02270 FROIDMONT-COHARTILLE (FR)
(74) Mandataire: Santarelli

(56) Documents cités:
- WO-A1-00/01047
- WO-A1-89/11775
- WO-A1-2014/167520
- US-A- 3 378 713
- US-A1- 2014 230 770

## Description

La présente invention se rapporte à un réacteur à plasma pour la formation d'un plasma dans un fluide.

Des applications visant le traitement des gaz par voies plasmatiques sont connues depuis plusieurs dizaines d'années. Le domaine de la chimie des procédés les met en oeuvre au quotidien pour dissocier ou combiner des molécules en phase gazeuse ou liquide.

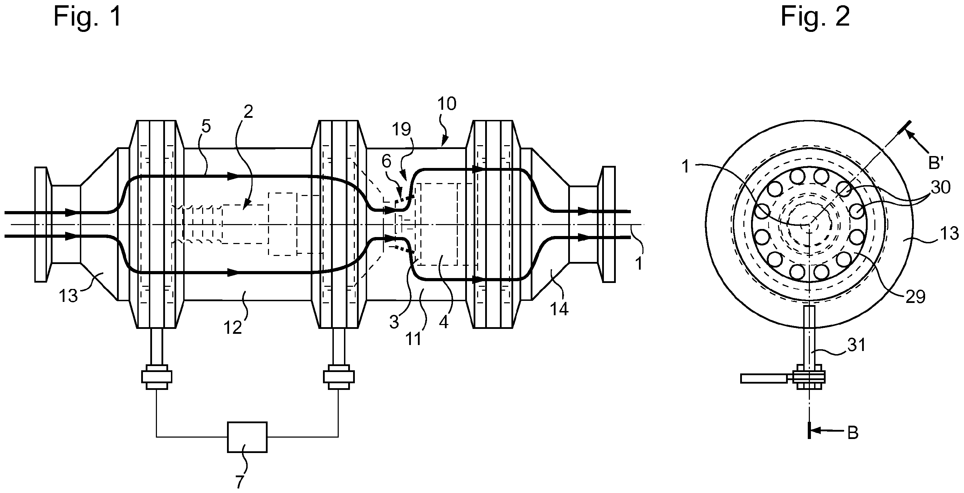

L'accent porté à la recherche sur la rétro-conversion du carbone a amené le développement de divers réacteurs pour lesquels l'optimisation des rendements était la motivation principale. La publication « Carbon Dioxide Decomposition by plasma Methods and Application of High Energy and High Density plasmas in Material Processing and Nanostructures » de 2010 aux noms de Srivastava et Kobayashi en recense quelques-uns utilisés pour le craquage du dioxyde de carbone (décomposition du dioxyde de carbone en oxygène et carbone). La figure 1 de cette publication antérieure illustre un réacteur à plasma classique comprenant une torche à plasma à base d'argon dont le jet plasmatique est généré par un arc à pression atmosphérique entre une électrode amont centrale, en forme de tige, et une électrode aval périphérique, en forme de rondelle chanfreinée en son centre, les électrodes étant soumises à un courant continu. La torche à plasma est agencée à une extrémité axiale d'un tube de quartz délimitant une chambre de réaction. Le fluide à craquer (dioxyde de carbone) est introduit radialement dans le dispositif au niveau de la sortie de la torche à plasma, à l'entrée du tube de quartz. Un inconvénient d'un tel réacteur à torche à plasma est qu'il est relativement complexe à mettre en oeuvre et à intégrer dans un système plus grand en raison notamment de la présence nécessaire d'une réserve et d'une alimentation en argon de la torche à plasma, et de l'alimentation du réacteur en fluide à craquer selon une direction radiale. Pour les mêmes raisons, l'agencement de plusieurs réacteurs en série ou en parallèle est malaisée.

On peut également observer un réacteur à plasma catalytique à la figure 1 de la publication « Conversion of carbon oxides into a membrane in a nonthermal plasma-catalytic reactor » de 2011 aux noms de Jwa, Mok et Lee, utilisé pour la méthanisation du dioxyde de carbone (conversion du dioxyde de carbone en méthane, par réaction avec de l'hydrogène). Un tel réacteur à plasma catalytique comprend un tube de quartz, au centre duquel est placée une électrode à tige agissant en tant qu'électrode de décharge, et à l'extérieur duquel est enroulée une feuille de cuivre faisant office d'électrode de masse. L'ensemble est placé dans un four tubulaire destiné à chauffer réactifs (hydrogène et dioxyde de carbone) et catalyseurs à 200-300°C. L'électrode de décharge est soumise à un courant alternatif à haute tension (entre 6,5 et 10,3 kV) à une fréquence de 1kHz. Un tel réacteur à plasma catalytique est plus simple et plus compact que le réacteur à torche à plasma précédemment décrit mais la probabilité qu'une molécule du fluide à convertir circulant dans le tube à quartz traverse un arc généré entre les deux électrodes reste faible, des arcs pouvant survenir sur toute la longueur et toute la circonférence du tube à quartz de façon ponctuelle et aléatoire. Un réacteur à plasma comprenant un arc tournant est divulgué par US 3,378,713. L'invention vise à pallier ces inconvénients en proposant un réacteur à plasma froid de conception extrêmement simple, compact, peu onéreux et à rendement maîtrisé. Dans une version préférée, l'invention fournit un réacteur pouvant être fabriqué à partir d'éléments disponibles dans le commerce à bon marché, et avec peu de modifications.

L'invention propose un réacteur à plasma pour la formation d'un plasma dans un fluide en circulation, le réacteur comprenant :
✔ une première et une seconde électrode raccordées à une source de tension alternative, pour la création d'arcs électriques entre lesdites première et seconde électrodes aux fins de génération d'un plasma dans le fluide en circulation,
✔ une portion d'enceinte délimitant une chambre de réaction à l'intérieur de laquelle le plasma est généré.
Le réacteur selon l'invention est caractérisé en ce que :
✔ la première électrode comprend une tige centrale agencée sur un axe central du réacteur, laquelle tige centrale est enveloppée d'un isolateur à l'exception d'une extrémité aval, qui dépasse de l'isolateur, et d'une zone amont de connexion, qui reste donc accessible,
✔ la seconde électrode comprend un corps tubulaire périphérique entourant l'isolateur et présentant une extrémité de décharge située dans la chambre de réaction,
✔ le réacteur comprend un disque conducteur, appelé ici de disque de contrôle, présentant une face avant reliée à l'extrémité aval de la tige centrale de la première électrode,
✔ le réacteur comprend un aimant permanent plaqué contre une face arrière du disque de contrôle,
✔ une ou plusieurs rainures ou nervures sont ménagées sur la face avant du disque de contrôle selon un motif en relief définissant des pointes successives de départ d'arc électrique réparties autour de l'axe central du réacteur de façon à générer des d'arcs électriques situés sur un cône dit cône de réaction (le terme « cône » couvrant ici des surfaces coniques, cylindriques ou de forme moins régulière), lesquels arcs électriques apparaissent comme tournant autour de l'axe central. Par exemple, la face avant du disque de contrôle présente au moins une nervure circulaire centrée sur l'axe central. Cette nervure peut être la bordure commune de deux rainures circulaires adjacentes obtenues par gravure de la face avant du disque de contrôle.
✔ le réacteur présente un espace cylindrique de circulation entre le corps tubulaire de la seconde électrode et l'isolateur, espace cylindrique de circulation dans lequel le fluide est introduit et dont il ressort à l'intérieur du cône de réaction.

En raccordant les première et seconde électrodes à une source de tension, une différence de potentiels apparaît entre les première et seconde électrodes, plus précisément entre l'extrémité de décharge du corps tubulaire de la seconde électrode et la face avant du disque de contrôle qui prolonge la tige centrale de la première électrode. A partir d'un seuil de différence de potentiels donné, un arc électrique se forme entre les deux électrodes.

La présence de l'aimant crée un champ magnétique qui influe sur la forme de cet arc électrique et le déplace. Les pointes successives ménagées sur la face avant du disque de contrôle définissent les points où les arcs vont survenir.

En raccordant les première et seconde électrodes à une source de tension alternative, des arcs se forment successivement sur lesdites pointes en suivant le motif en relief de la face avant du disque de contrôle, donnant l'impression d'un arc électrique tournant autour de l'axe central du réacteur. C'est pourquoi le réacteur selon l'invention peut être qualifié de réacteur à plasma tournant.

Autrement dit, le disque de contrôle permet de maîtriser la localisation et le déplacement des arcs électriques se formant dans la chambre de réaction.

En choisissant une fréquence adéquate pour la source alternative, la vitesse de déplacement de cet arc tournant peut être suffisante pour générer une sorte de rideau tubulaire de plasma quasiment continu et constant, l'expression « rideau tubulaire de plasma » désignant un rideau tubulaire d'arcs électriques successifs aptes à transformer le fluide en plasma (afin d'obtenir la réaction souhaitée). Ce rideau tubulaire de plasma peut être conique, cylindrique ou de forme moins régulière selon le motif en relief de la face avant du disque de contrôle.

Grâce à l'espace cylindrique de circulation prévu entre l'isolateur et le corps tubulaire de la seconde électrode, le fluide arrive dans la chambre de réaction à proximité de l'axe central (autour de la tige centrale de la première électrode), à l'intérieur du rideau tubulaire de plasma et est forcé à traverser ledit rideau tubulaire de plasma. C'est pourquoi le réacteur selon l'invention peut être qualifié de réacteur à plasma tournant et à forçage de flux. Dans un réacteur selon l'invention, le fluide est de préférence mis en circulation de façon continue avec un débit constant.

La fréquence de la source électrique qui permet de maximiser le rendement (c'est-à-dire de maximiser la probabilité qu'une molécule du fluide rencontre un arc électrique) dépend de divers facteurs, dont : le débit d'alimentation en fluide qui peut dépendre de l'application concernée et du système dans lequel le réacteur est intégré (on comprendra que plus ce débit est grand, plus la vitesse de déplacement de l'arc en rotation autour de l'axe central du réacteur devra être grande) ; la géométrie de l'ensemble du réacteur et en particulier la distance entre l'extrémité de décharge du corps tubulaire de la seconde électrode et chaque pointe de la face avant du disque de contrôle. L'homme du métier est à même de déterminer cette fréquence d'utilisation optimale.

De préférence, l'extrémité de décharge du corps tubulaire de la seconde électrode est plane, autrement dit dépourvue de pointe. Il en résulte que l'arc électrique peut *a priori* se produire spontanément en tout point de cette extrémité de décharge.

Selon une caractéristique possible, le corps tubulaire de la seconde électrode est percé de trous de circulation s'ouvrant sur l'espace cylindrique de circulation, et le fluide est introduit dans l'espace cylindrique de circulation par ces trous de circulation. Les trous de circulation peuvent être percés selon des directions radiales ou éventuellement selon des directions inclinées entre une direction radiale et la direction axiale.

Selon une caractéristique possible, le disque de contrôle et l'aimant permanent présentent chacun un diamètre supérieur à un diamètre externe de l'extrémité de décharge du corps tubulaire de la seconde électrode. On peut alors obtenir un rideau tubulaire de plasma conique. Les diamètres respectifs du disque de contrôle et de l'aimant permanent peuvent être différents ou, de préférence, identiques.

Selon une caractéristique possible, la portion d'enceinte délimitant la chambre de réaction est en un matériau transparent (à la lumière visible), par exemple en polymétacrylate de méthyle, afin de pouvoir observer à l'oeil nu le rideau tubulaire de plasma et la réaction.

Selon une caractéristique possible, le réacteur comprend de plus une portion d'enceinte formant rallonge, qui prolonge axialement vers l'amont la portion d'enceinte délimitant la chambre de réaction. Le fluide est alors avantageusement introduit axialement dans la portion d'enceinte formant rallonge. Il circule tout d'abord selon la direction axiale entre l'isolateur et la portion d'enceinte formant rallonge, puis traverse le corps tubulaire de la seconde électrode (par exemple sensiblement radialement) par les trous de circulation de celui-ci, à la suite desquels il circule à nouveau globalement axialement dans l'espace cylindrique de circulation entre le corps tubulaire de la seconde électrode et l'isolateur, pour déboucher en partie centrale du cône de réaction (où se forme le rideau tubulaire de plasma) dans la chambre de réaction ; il est alors dévié radialement vers l'extérieur par la présence du disque de contrôle pour traverser le cône de réaction, puis le fluide (alors essentiellement des produits de réaction) ressort de la chambre de réaction de préférence sensiblement axialement.

Selon une caractéristique possible, la portion d'enceinte formant rallonge est en un matériau transparent pour permettre un contrôle visuel du fluide en circulation.

Selon une caractéristique possible, le réacteur comprend :
✔ une rondelle plate conductrice rattachée à la zone de connexion de la tige centrale de la première électrode, et
✔ une première fiche en contact avec ladite rondelle plate conductrice pour la connexion de la première électrode à la source de tension alternative, la rondelle plate conductrice étant de plus configurée pour permettre sa fixation à la portion d'enceinte formant rallonge.

De préférence, cette rondelle plate conductrice est percée axialement d'ouvertures pour le passage du fluide, qui peut dans ce cas être introduit dans le réacteur, de préférence axialement, en amont de ladite rondelle plate conductrice.

Selon une caractéristique possible, le réacteur comprend :
✔ une rondelle conique conductrice ayant un sommet rattaché au corps tubulaire de la seconde électrode en aval des trous de circulation de celui-ci et une base située en amont desdits trous de circulation, laquelle base est prolongée par une couronne de connexion configurée pour permettre sa fixation à la portion d'enceinte délimitant la chambre de réaction et aussi de préférence, le cas échéant, à la portion d'enceinte formant rallonge, et
✔ une seconde fiche en contact avec la couronne de connexion de la rondelle conique conductrice pour la connexion de la seconde électrode à la source de tension alternative.

La rondelle conique conductrice sert donc à la fois à l'alimentation en électricité de la de la seconde électrode et à la canalisation du fluide : d'une part elle permet de façon simple de raccorder le corps tubulaire de la seconde électrode à une fiche ; d'autre part elle forme une butée conique pour le fluide arrivant axialement, laquelle butée conique dévie le fluide vers l'axe central et force ainsi le fluide vers les trous de circulation du corps tubulaire de la seconde électrode.

Selon une caractéristique possible, le réacteur comprend un embout d'entrée, de préférence formé par un raccord normalisé par exemple de type DN16, agencé en amont de la portion d'enceinte formant rallonge (ou, à défaut, de la portion d'enceinte délimitant la chambre de réaction) et fixé à celle-ci.

Selon une caractéristique possible, le réacteur comprend un embout de sortie, de préférence formé par un raccord normalisé par exemple de type DN16, agencé en aval de la portion d'enceinte délimitant la chambre de réaction et fixé à celle-ci.

Dans une version préférée particulièrement économique, l'invention repose sur l'utilisation d'une bougie d'allumage classique de véhicule automobile, qui est légèrement modifiée comme expliqué ci-après. Le réacteur selon l'invention comprend alors une bougie d'allumage, comportant une électrode centrale à tige et un corps de bougie dépourvu d'électrode de masse saillante, l'électrode centrale à tige de la bougie d'allumage formant la tige centrale de la première électrode du réacteur, le corps de bougie de la bougie d'allumage formant le corps tubulaire de la seconde électrode du réacteur, l'isolateur de la bougie d'allumage correspondant à l'isolateur du réacteur défini supra.

Deux modifications mineures de la bougie d'allumage traditionnelle sont donc nécessaires : l'électrode de masse saillante qui prolonge le corps de bougie et fait face à l'extrémité avale de l'électrode centrale dans la bougie traditionnelle est sectionnée à sa base de façon à ce que le corps de bougie présente une extrémité circulaire plane (qui correspond à l'extrémité de décharge de la seconde électrode du réacteur) ; des trous de circulation sont percés dans le corps de bougie, sensiblement radialement ou selon une direction inclinée (entre une direction radiale et la direction axiale, et vers l'aval c'est-à-dire vers l'extrémité de décharge de la bougie).

L'invention s'étend à un réacteur à plasma tournant caractérisé en combinaison par tout ou partie des caractéristiques mentionnées ci-avant et ci-après.

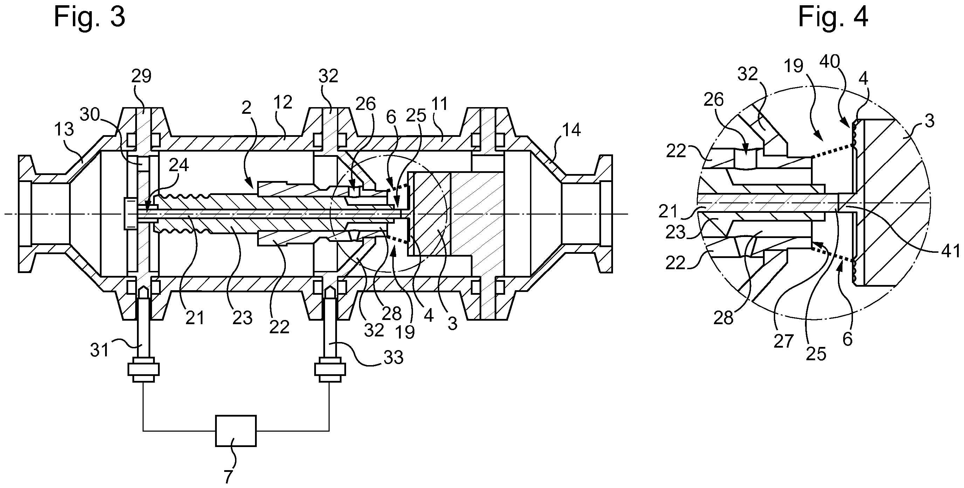

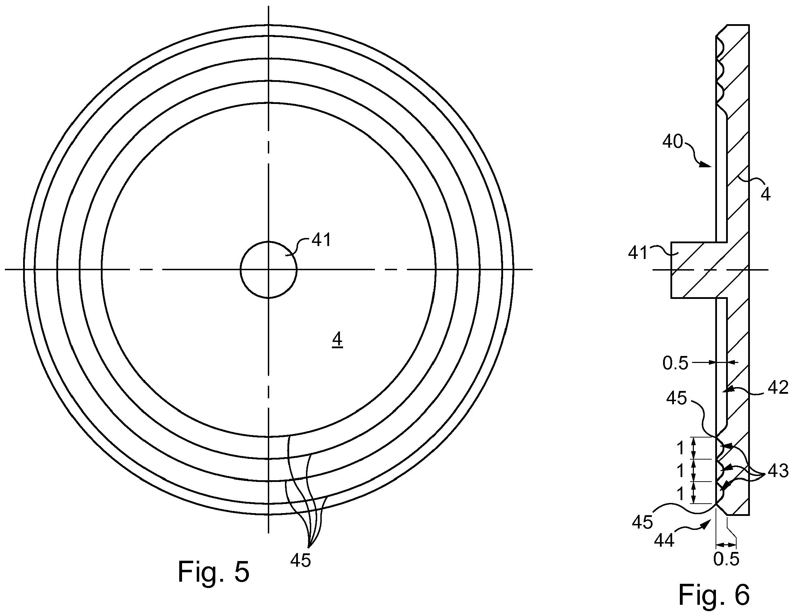

D'autres détails et avantages de la présente invention apparaîtront à la lecture de la description suivante, qui se réfère aux dessins schématiques annexés et porte sur des modes de réalisation préférentiels, fournis à titre d'exemples non limitatifs. Sur ces dessins :
✔ La figure 1 est une vue schématique de profil d'un mode de réalisation préférentiel d'un réacteur à plasma tournant selon l'invention.
✔ la figure 2 est une vue schématique de face du réacteur à plasma tournant de la figure 1.
✔ la figure 3 est une coupe longitudinale selon un plan B'B, tel que repéré sur la figure 2, du réacteur à plasma de la figure 1.
✔ La figure 4 est un agrandissement d'une portion du réacteur à plasma de la figure 3,
✔ la figure 5 est une vue schématique de face d'un disque de contrôle selon l'invention,
✔ la figure 6 est une coupe longitudinale du disque de contrôle de la figure 5.

Conformément à la version préférée de l'invention, le réacteur illustré sur les figures 1 à 3 comprend essentiellement : une bougie d'allumage 2, une enceinte 10, un aimant permanent 3, un disque de contrôle 4 et une source électrique 7.

L'enceinte 10 comprend une portion d'enceinte 11 délimitant une chambre de réaction 19, une portion d'enceinte 12 formant rallonge, un embout d'entrée 13 formé par un raccord normalisé de type DN 16, par lequel le fluide (réactifs) est introduit axialement dans le réacteur, et un embout de sortie 14 formé par un raccord normalisé de type DN 16, par lequel le fluide (produits de réaction et éventuels réactifs n'ayant pas réagi) sort axialement du réacteur. L'enceinte 10 est symétrique de révolution autour d'un axe central 1. Les portions d'enceinte 11 et 12 sont essentiellement cylindriques -de section circulaire- à l'exception de leurs extrémités axiales qui sont en forme de collerette. Ces portions d'enceintes 11 et 12 sont en un matériau structurant, de préférence transparent et léger, tel que le polyméthacrylate de méthyle connu sous le nom commercial Plexiglas®. L'utilisation de raccords normalisés pour la réalisation des embouts d'entrée 13 et de sortie 14 facilite l'intégration du réacteur selon l'invention dans un système et facilite également le raccordement en série de plusieurs réacteurs selon l'invention.

Dans toute la description, les termes « amont » et « aval » font référence à la direction axiale définie par l'axe central 1 du réacteur et au sens de circulation globale du fluide 5. Sur les figures 1 et 3, ce sens de circulation globale va de la gauche vers la droite.

La bougie d'allumage 2 est une bougie d'allumage traditionnelle pour véhicule automobile à essence, dans laquelle on peut reconnaître une électrode centrale 21 à tige (dite tige centrale 21 par la suite), un isolateur 23 en céramique et un corps de bougie 22 métallique. De façon usuelle, la tige centrale 21 présente une extrémité aval 25 qui s'étend axialement en saillie de l'isolateur 23, et une extrémité opposée qui est elle aussi « dénudée » (c'est-à-dire dépourvue d'isolateur à sa périphérie) de façon à offrir une zone de connexion 24.

En raison de la présence d'un épaulement dans l'isolateur 23, un espace cylindrique 28, appelé ici espace cylindrique de circulation, apparaît entre l'isolateur 23 et le corps de bougie 22 à proximité de l'extrémité aval 25 de la tige centrale 21.

La tige centrale 21 de la bougie d'allumage 2 fait partie d'une première électrode du réacteur à plasma, tandis que le corps de bougie 22 fait partie d'une seconde électrode du réacteur à plasma.

La bougie d'allumage 2 est agencée à l'intérieur de l'enceinte 10 de façon à ce que son axe central coïncide avec l'axe central 1 du réacteur et à ce que l'extrémité aval 25 de son électrode centrale 21 soit située dans la chambre de réaction 19 du réacteur.

La bougie d'allumage 2 traditionnelle a subi deux modifications :
✔ des trous de circulation 26 d'axes radiaux et débouchant dans l'espace cylindrique de circulation 28 ont été ménagés dans le corps de bougie 22 ;
✔ l'électrode de masse qui prolonge usuellement le corps de bougie en formant une patte saillante en regard de l'extrémité aval 25 de l'électrode centrale a été sectionnée (elle n'apparaît donc pas sur les figures) de sorte que le corps de bougie 22 présente une face extrême 27, appelée ici extrémité de décharge, qui est plane (elle s'étend dans un plan transversal orthogonal à l'axe central 1).

L'aimant permanent 3 est un aimant en forme de disque dont l'axe coïncide avec l'axe central 1 du réacteur. Il s'agit avantageusement d'un aimant en néodyme.

Le disque de contrôle 4 est en un matériau conducteur d'électricité, par exemple en cuivre. Il présente une face avant 40 décrite plus en détail plus loin, et une face arrière qui est accolée à l'aimant permanent 3 et est de même diamètre que ce dernier. À l'instar de l'aimant permanent 3, le disque de contrôle 4 est centré sur l'axe central 1 du réacteur.

En son centre, la face avant 40 du disque de contrôle 4 présente un ergot 41 qui la relie à l'extrémité aval 25 de la tige centrale 21 de la bougie d'allumage. Le disque de contrôle 4 prolonge ainsi la tige centrale 21 et fait partie de la première électrode du réacteur.

La face avant 40 du disque de contrôle présente des zones en creux concentriques, obtenues par gravure par exemple : une première zone centrale 42 à fond plat et angles adoucis, trois rainures circulaires 43 et un chanfrein externe 44. Ces zones gravées forment quatre nervures circulaires concentriques 45 définissant quatre cercles de départ d'arc électriques.

En fonctionnement, des arcs électriques sont produits sous l'effet de la différence de potentiels entre les deux électrodes, entre l'extrémité de décharge 27 du corps de bougie (seconde électrode du réacteur) et la face avant 40 du disque de contrôle (première électrode du réacteur). Ces arcs électriques forment un cône de réaction 6 générant un rideau tubulaire de plasma. La référence 6 désigne aussi bien le cône de réaction (en tant que forme géométrique sur laquelle s'inscrivent les arcs électriques générés) que le rideau tubulaire de plasma (résultant de l'effet des arcs électriques sur le fluide en circulation).

La forme circulaire des nervures 45 prévues sur la face avant 40 du disque de contrôle est avantageuse compte tenu de la symétrie de révolution de l'aimant permanent 3 et du champ magnétique qu'il génère. Cette forme circulaire permet d'obtenir un arc électrique tournant se déplaçant à vitesse constante. Elle limite les risques d'interruption du rideau tubulaire de plasma 6 obtenu.

La présence, sur la face avant 40 du disque 4 de plusieurs nervures circulaires 45 de diamètres différents permet de disposer de plusieurs cercles de départ d'arc électrique situés à différentes distances de l'autre électrode (extrémité de décharge 27 du corps de bougie). Les chances de déclencher aisément un arc électrique et d'entretenir un rideau de plasma tournant sont ainsi multipliées et un même disque peut, de surcroît, être utilisé pour différentes applications. Selon l'invention, il suffit donc que la face avant du disque de contrôle présente au moins une nervure circulaire.

En l'exemple non limitatif illustré, la distance selon la direction axiale entre l'extrémité de décharge 27 du corps de bougie et la face avant 40 du disque de contrôle et de 5,2 mm. La distance entre un point de l'arête circulaire externe de l'extrémité de décharge 27 du corps de bougie et un point du disque de contrôle 4 situé dans le même plan longitudinal et sur la nervure 45 de plus petit diamètre est de 5,5 mm. Le diamètre du disque de contrôle 4 et de l'aimant permanent 3 est de 22 mm. La profondeur des zone gravée 42 et rainures 43 est de 0,5 mm. La pente des nervures 45 est de 45°.

Parmi les paramètres les plus influents sur le fonctionnement du réacteur, on peut citer : le rayon de la nervure du disque de contrôle 4, la distance entre cette nervure et l'extrémité de décharge 27 du corps de bougie, les caractéristiques de l'aimant permanent 3, le débit et la pression des réactifs en présence, la tension (et donc de la différence de potentiels entre les deux électrodes du réacteur) et la fréquence de la source électrique 7. Ces divers paramètres sont à optimiser en fonction de l'application concernée. Les dimensions précédemment indiquées à titre d'exemples peuvent ne pas être optimales selon l'application envisagée.

Le réacteur comprend de plus une rondelle plate 29, reliée en son centre à la zone de connexion 24 de la tige centrale 21 et fixée, d'un côté, à une extrémité aval de l'embout d'entrée 13 et, de l'autre côté, à une extrémité amont de la portion d'enceinte 12 formant rallonge. Une tige filetée 31 est vissée dans un alésage radial de cette rondelle plate 29. Cette tige filetée 31 sert de fiche pour la connexion électrique de la première électrode du réacteur à la source de tension alternative 7. La rondelle plate 29 est percée d'une pluralité d'ouvertures 30 selon la direction axiale, qui permettent le passage du fluide depuis l'embout d'entrée 13 vers la rallonge 12.

Le réacteur comprend de plus une rondelle conique 32 dont le sommet percé du cône enserre le corps de bougie 22 en aval des trous de circulation 26, et dont la base du cône est prolongée par une collerette fixée, d'un côté, à une extrémité aval de la portion d'enceinte 12 formant rallonge et, de l'autre côté, à une extrémité amont de la portion d'enceinte 11 délimitant la chambre de réaction. Un alésage radial est ménagé dans cette collerette pour la réception d'une tige filetée 33 servant de fiche pour la connexion électrique de la seconde électrode du réacteur à la source de tension alternative. La forme conique de la rondelle 32 contraint le fluide arrivant axialement depuis l'embout d'entrée 13 et la rallonge 12 vers les trous de circulation 26. La façon (moyens utilisés, tels que pompe, débit choisi, etc.) dont la circulation du fluide est assurée dans le système dans lequel le réacteur est intégré dépend de l'application considérée et est indifférente à la présente invention. Le fluide peut par exemple être introduit dans le réacteur à l'aide d'une pompe (non représentée) agencée en amont ou en en aval de celui-ci. A l'intérieur du réacteur, le trajet de circulation du fluide peut être observé à la figure 1.

Comme on peut le constater, l'ensemble du réacteur peut être fabriqué à partir d'éléments simples et courants, disponibles dans le commerce à des prix abordables voir faibles. L'ensemble obtenu est très compact : l'exemple illustré (hors source d'alimentation 7) a diamètre externe maximal de 55 mm (diamètre externe de la rondelle plate 29 et de la collerette de la rondelle conique 32) et une longueur de 153 mm. Le réacteur fournit un très bon rendement qui peut facilement être optimisé notamment en adaptant la distance entre l'extrémité de décharge 27 de la seconde électrode et le disque de contrôle 4 ainsi que le motif en relief prévu sur la face avant 40 de ce dernier, en fonction notamment de la réaction souhaitée et du débit du fluide.

L'invention peut faire l'objet de nombreuses variantes par rapport aux modes de réalisation décrits ci-dessus et illustrés, par exemple dans le choix des matériaux utilisés, dans les dimensions, etc., dès lors que celles-ci restent dans le cadre défini par les revendications annexées.

## Revendications

1. Réacteur à plasma pour la formation d'un plasma dans un fluide en circulation, le réacteur comprenant :
✔ une première (21, 4, 29, 31) et une seconde électrode (22, 32, 33) raccordées à une source de tension alternative (7), pour la création d'arcs électriques entre lesdites première et seconde électrodes aux fins de génération d'un plasma dans le fluide en circulation,
✔ une portion d'enceinte (11) délimitant une chambre de réaction (19) à l'intérieur de laquelle le plasma est généré,
✔ la première électrode comprend une tige centrale (21) agencée sur un axe central (1) du réacteur, laquelle tige est enveloppée d'un isolateur (23) à l'exception d'une extrémité aval (25), qui dépasse de l'isolateur, et d'une zone de connexion (24),
✔ la seconde électrode comprend un corps tubulaire (22) entourant l'isolateur (23) et présentant une extrémité de décharge (27) située dans la chambre de réaction (19),
✔ le réacteur comprend un disque de contrôle (4), qui est conducteur et qui présente une face avant (40) reliée à l'extrémité aval (25) de la tige centrale de la première électrode,
✔ le réacteur comprend un aimant permanent (3) plaqué contre une face arrière du disque de contrôle (4),
✔ une ou plusieurs rainures (42, 43, 44) ou nervures (45) sont ménagées sur la face avant (40) du disque de contrôle selon un motif en relief définissant des pointes successives (45) de départ d'arc électrique réparties autour de l'axe central (1) du réacteur de façon à générer des arcs électriques qui sont situés sur un cône de réaction (6) et apparaissent comme tournant autour de l'axe central (1),
✔ le réacteur présente un espace cylindrique de circulation (28) entre le corps tubulaire (22) de la seconde électrode et l'isolateur (23), espace cylindrique de circulation (28) dans lequel le fluide est introduit et dont il ressort à l'intérieur du cône de réaction (6).

2. Réacteur à plasma selon la revendication 1, **caractérisé en ce que** le motif en relief de la face avant (40) du disque de contrôle comprend au moins une nervure (45) circulaire.

3. Réacteur à plasma selon la revendication 1 ou 2, caractérisé en ce l'extrémité de décharge (27) du corps tubulaire de la seconde électrode est plane.

4. Réacteur à plasma selon l'une des revendications précédentes, **caractérisé en ce que** le corps tubulaire (22) de la seconde électrode est percé de trous de circulation (26) s'ouvrant sur l'espace cylindrique de circulation (28).

5. Réacteur à plasma selon l'une des revendications précédentes, **caractérisé en ce que** le disque de contrôle (4) et l'aimant permanent (3) présentent chacun un diamètre supérieur à un diamètre externe de l'extrémité de décharge (27) du corps tubulaire de la seconde électrode.

6. Réacteur à plasma selon l'une des revendications précédentes, **caractérisé en ce que** la portion d'enceinte (11) délimitant la chambre de réaction est en un matériau transparent.

7. Réacteur à plasma selon l'une des revendications précédentes, **caractérisé en ce que** le réacteur comprend une portion d'enceinte (12) formant rallonge, qui prolonge axialement vers l'amont la potion d'enceinte (11) délimitant la chambre de réaction.

8. Réacteur à plasma selon l'une des revendications précédentes, **caractérisé en ce qu'**il comprend :
✔ une rondelle plate conductrice (29) rattachée à la zone de connexion (24) de la tige centrale de la première électrode, et
✔ une première fiche (30) en contact avec ladite rondelle plate conductrice (29) pour la connexion de la première électrode à la source de tension alternative (7), la rondelle plate conductrice (29) étant de plus configurée pour permettre sa fixation à la portion d'enceinte (12) formant rallonge
✔ la rondelle plate conductrice (29) étant percée axialement d'ouvertures (30) pour le passage du fluide.

9. Réacteur à plasma selon l'une des revendications précédentes, **caractérisé en ce qu'**il comprend :
✔ une rondelle conique conductrice (32) ayant un sommet rattaché au corps tubulaire (22) de la seconde électrode en aval des trous de circulation (26) de celui-ci et une base située en amont desdits trous de circulation, laquelle base est prolongée par une couronne de connexion configurée pour permettre sa fixation à la portion d'enceinte (11) délimitant la chambre de réaction, et
✔ une seconde fiche (33) en contact avec la couronne de connexion de la rondelle conique conductrice (32) pour la connexion de la seconde électrode à la source de tension alternative (7).

10. Réacteur à plasma selon la revendication 7, **caractérisé en ce qu'**il comprend :
✔ un embout d'entrée (13) formé par un raccord normalisé, agencé en amont de la portion d'enceinte (12) formant rallonge et fixé à celle-ci,
✔ un embout de sortie (14) formé par un raccord normalisé, agencé en aval de la portion d'enceinte (11) délimitant la chambre de réaction et fixé à celle-ci.

11. Réacteur à plasma selon l'une des revendications précédentes, **caractérisé en ce qu'**il comprend une bougie d'allumage (2), comportant une électrode centrale à tige et un corps de bougie dépourvu d'électrode de masse saillante, l'électrode centrale à tige de la bougie d'allumage formant la tige centrale (21) de la première électrode du réacteur, le corps de bougie de la bougie d'allumage formant le corps tubulaire (22) de la seconde électrode du réacteur, l'isolateur de la bougie d'allumage correspondant à l'isolateur (23) du réacteur.

## Patentansprüche

1. Plasmareaktor zum Bilden eines Plasmas in einem strömenden Medium, wobei der Reaktor enthält:
- eine erste (21, 4, 29, 31) und eine zweite Elektrode (22, 32, 33), die an eine Wechselspannungsquelle (7) angeschlossen sind, um an den Endpunkten der Erzeugung eines Plasmas in dem strömenden Medium elektrische Lichtbögen zwischen der ersten und der zweiten Elektrode zu schaffen,
- einen Behälterabschnitt (11), der eine Reaktionskammer (19) eingrenzt, innerhalb welcher das Plasma erzeugt wird,
wobei
- die erste Elektrode einen mittigen Stab (21) enthält, der auf einer Mittelachse (1) des Reaktors angeordnet ist, wobei der Stab von einem Isolator (23) umhüllt wird, mit Ausnahme von einem aus dem Isolator vorstehenden, stromabwärtigen Ende (25) und einem Verbindungsbereich (24),
- die zweite Elektrode einen rohrförmigen Körper (22) enthält, der den Isolator (23) umgibt und ein Entladungsende (27) aufweist, das sich in der Reaktionskammer (19) befindet,
- der Reaktor eine Steuerscheibe (4) aufweist, die leitend ausgeführt ist und eine Vorderseite (40) aufweist, die mit dem stromabwärtigen Ende (25) des mittigen Stabs der ersten Elektrode verbunden ist,
- der Reaktor einen Permanentmagneten (3) enthält, der an einer Rückseite der Steuerscheibe (4) angedrückt ist,
- eine oder mehrere Nuten (42, 43, 44) bzw. Rippen (45) an der Vorderseite (40) der Steuerscheibe nach einem reliefartigen Muster ausgebildet sind, das aufeinanderfolgende Anfangsspitzen (45) für elektrische Lichtbögen definiert, die um die Mittelachse (1) des Reaktors herum verteilt sind, so dass elektrische Lichtbögen erzeugt werden, die an einem Reaktionskonus (6) liegen und als um die Mittelachse (1) herum drehend erscheinen,
- der Reaktor einen zylindrischen Strömungsraum (28) zwischen dem rohrförmigen Körper (22) der zweiten Elektrode und dem Isolator (23) aufweist, in welchen zylindrischen Strömungsraum (28) das Medium eingeleitet wird und aus dem es innerhalb des Reaktionskonus (6) wiederaustritt.

2. Plasmareaktor nach Anspruch 1,
**dadurch gekennzeichnet, dass**
das reliefartige Muster der Vorderseite (40) der Steuerscheibe zumindest eine kreisförmige Rippe (45) enthält.

3. Plasmareaktor nach Anspruch 1 oder 2,
**dadurch gekennzeichnet, dass**
das Entladungsende (27) des rohrförmigen Körpers der zweiten Elektrode eben ausgeführt ist.

4. Plasmareaktor nach einem der vorangehenden Ansprüche,
**dadurch gekennzeichnet, dass**
der rohrförmige Körper (22) der zweiten Elektrode mit Strömungsbohrungen (26) versehen ist, die sich zum zylindrischen Strömungsraum (28) hin öffnen.

5. Plasmareaktor nach einem der vorangehenden Ansprüche,
**dadurch gekennzeichnet, dass**
die Steuerscheibe (4) und der Permanentmagnet (3) jeweils einen Durchmesser aufweisen, der größer als ein Außendurchmesser des Entladungsendes (27) des rohrförmigen Körpers der zweiten Elektrode ist.

6. Plasmareaktor nach einem der vorangehenden Ansprüche,
**dadurch gekennzeichnet, dass**
der die Reaktionskammer eingrenzende Behälterabschnitt (11) aus transparentem Material besteht.

7. Plasmareaktor nach einem der vorangehenden Ansprüche,
**dadurch gekennzeichnet, dass**
der Reaktor einen Behälterabschnitt (12) enthält, der einen Fortsatz bildet, welcher den die Reaktionskammer eingrenzenden Behälterabschnitt (11) axial stromaufwärts fortsetzt.

8. Plasmareaktor nach einem der vorangehenden Ansprüche,
**dadurch gekennzeichnet, dass** er enthält:
- eine leitende, flache Scheibe (29), die mit dem Verbindungsbereich (24) des mittigen Stabs der ersten Elektrode verbunden ist, und
- einen ersten Kontaktstift (30), der mit der leitenden, flachen Scheibe (29) in Kontakt ist, um die erste Elektrode mit der Wechselspannungsquelle (7) zu verbinden, wobei die leitende, flache Scheibe (29) ferner dazu ausgelegt ist, deren Befestigung an den den Fortsatz bildenden Behälterabschnitt (12) zu gestatten,
- wobei die leitende, flache Scheibe (29) axial mit Bohrungen (30) für den Durchtritt des Mediums versehen ist.

9. Plasmareaktor nach einem der vorangehenden Ansprüche,
**dadurch gekennzeichnet, dass** er enthält:
- eine leitende, konische Scheibe (32), deren Scheitel mit dem rohrförmigen Körper (22) der zweiten Elektrode stromabwärts der Strömungsbohrungen (26) desselben verbunden ist und deren Grundfläche stromaufwärts der Strömungsbohrungen liegt, welche Grundfläche von einem Verbindungskranz fortgesetzt wird, der dazu ausgelegt ist, deren Befestigung an den die Reaktionskammer eingrenzenden Behälterabschnitt (11) zu gestatten, und
- einen zweiten Kontaktstift (33) in Kontakt mit dem Verbindungskranz der leitenden, konischen Scheibe (32) zum Verbinden der zweiten Elektrode mit der Wechselspannungsquelle (7).

10. Plasmareaktor nach Anspruch 7,
**dadurch gekennzeichnet, dass** er enthält:
- ein Einlassstück (13), das aus einem genormten Anschlussstück gebildet ist, das stromaufwärts des den Fortsatz bildenden Behälterabschnitts (12) angeordnet und an diesen befestigt ist,
- ein Auslassstück (14), das aus einem genormten Anschlussstück gebildet ist, das stromabwärts des die Reaktionskammer eingrenzenden Behälterabschnitts (11) angeordnet und an diesen befestigt ist.

11. Plasmareaktor nach einem der vorangehenden Ansprüche,
**dadurch gekennzeichnet, dass**
er eine Zündkerze (2) enthält, die eine mittige Stabelektrode und einen Kerzenkörper ohne vorspringende Masseelektrode enthält, wobei die mittige Stabelektrode der Zündkerze den mittigen Stab (21) der ersten Elektrode des Reaktors bildet, wobei der Kerzenkörper der Zündkerze den rohrförmigen Körper (22) der zweiten Elektrode des Reaktors bildet und wobei der Isolator der Zündkerze dem Isolator (23) des Reaktors entspricht.

## Claims

1. A plasma reactor for forming a plasma in a flowing fluid, the reactor comprising:
✔ a first (21, 4, 29, 31) and a second electrode (22, 32, 33) connected to a source of alternating voltage (7), for the creation of electric arcs between said first and second electrodes for the purposes of generating a plasma in the flowing fluid,
✔ a portion of vessel (11) delimiting a reaction chamber (19) within which the plasma is generated,
✔ the first electrode comprises a central rod (21) arranged on a central axis (1) of the reactor, which rod is enveloped with an insulator (23) except for a downstream end (25), which projects from the insulator, and a connection region (24),
✔ the second electrode comprises a tubular body (22) surrounding the insulator (23) and having a discharge end (27) situated in the reaction chamber (19),
✔ the reactor comprises a control disk (4), which is a conductor and which has a front face (40) linked to the downstream end (25) of the central rod of the first electrode,
✔ the reactor comprises a permanent magnet (3) juxtaposed against a back face of the control disk (4),
✔ one or more grooves (42, 43, 44) or ribs (45) are formed on the front face (40) of the control disk according to a pattern in relief defining successive electric arc starting points (45) distributed around the central axis (1) of the reactor so as to generate electric arcs which are situated on a reaction cone (6) and appear to turn around the central axis (1),
✔ the reactor has a cylindrical space (28) for flow between the tubular body (22) of the second electrode and the insulator (23), into which cylindrical space (28) the fluid is introduced and from which it leaves again within the reaction cone (6).

2. A plasma reactor according to claim 1, **characterized in that** the pattern in relief on the front face (40) of the control disk comprises at least one circular rib (45).

3. A plasma reactor according to claim 1 or 2, **characterized in that** the discharge end (27) of the tubular body of the second electrode is planar.

4. A plasma reactor according to one of the preceding claims, **characterized in that** the tubular body (22) of the second electrode is perforated with flow holes (26) open to the cylindrical flow space (28).

5. A plasma reactor according to one of the preceding claims, **characterized in that** the control disk (4) and the permanent magnet (3) each have a greater diameter than an outside diameter of the discharge end (27) of the tubular body of the second electrode.

6. A plasma reactor according to one of the preceding claims, **characterized in that** the portion of vessel (11) delimiting the reaction chamber is of a transparent material.

7. A plasma reactor according to one of the preceding claims, **characterized in that** the reactor comprises a portion of vessel (12) forming an extension, which extends axially and upstream the portion of vessel (11) delimiting the reaction chamber.

8. A plasma reactor according to one of the preceding claims, **characterized in that** it comprises:
✔ a flat conducting washer (29) attached to the connection region (24) of the central rod of the first electrode, and
✔ a first jack (30) in contact with said flat conducting washer (29) for the connection of the first electrode to the source of alternating voltage (7), the flat conducting washer (29) being furthermore configured to enable its fastening to the portion of vessel (12) forming an extension.
✔ the flat conducting washer (29) being axially perforated with openings (30) for the passage of the fluid.

9. A plasma reactor according to one of the preceding claims, **characterized in that** it comprises:
✔ a conical conducting washer (32) having an apex joined to the tubular body (22) of the second electrode downstream of the flow holes (26) of said body and a base situated upstream of said flow holes, which base is extended by a connection rim configured to enable its fastening to the portion of vessel (11) delimiting the reaction chamber, and
✔ a second jack (33) in contact with the connection rim of the conical conducting washer (32) for the connection of the second electrode to the source of alternating voltage (7).

10. A plasma reactor according to claim 7, **characterized in that** it comprises:
✔ an inlet end formation (13) formed by a standard connector, arranged upstream of the portion of vessel (12) forming an extension and fastened thereto,
✔ an outlet end formation (14) formed by a standard connector, arranged downstream of the portion of vessel (11) delimiting the reaction chamber and fastened thereto.

11. A plasma reactor according to one of the preceding claims, **characterized in that** it comprises a spark plug (2), comprising a central rod electrode and a plug body lacking any projecting ground electrode, the central rod electrode of the spark plug forming the central rod (21) of the first electrode of the reactor, the plug body of the spark plug forming the tubular body (22) of the second electrode of the reactor, the insulator of the spark plug corresponding to the insulator (23) of the reactor.
